# FASCICULE DE BREVET EUROPEEN

(11) **EP 2 152 551 B1**
(45) Date de publication et mention de la délivrance du brevet: **04.09.2013**
(21) Numéro de dépôt: 08759416.4
(22) Date de dépôt: 05.05.2008
(51) Int. Cl.: B60S 1/40

(54) **DISPOSITIF DE LIAISON COMPORTANT DES MOYENS DE LIMITATION DU RETOURNEMENT**
VERBINDUNGSVORRICHTUNG MIT MITTEL ZUR KIPPBEGRENZUNG
CONNECTING DEVICE COMPRISING MEANS THAT LIMIT OVERTURNING

(30) Priorité: 31.05.2007 FR 0703848
(43) Date de publication de la demande: 17.02.2010
(73) Titulaire: Valeo Systèmes d'Essuyage, 78321 La Verrière (FR)
(72) Inventeur: ESPINASSE, Philippe, F-63114 Coudes (FR)
(86) Numéro de dépôt international: PCT/EP2008/055479
(87) Numéro de publication internationale: WO 2008/148615

(56) Documents cités:
- FR-A- 2 801 551
- FR-A1- 2 866 298
- FR-A1- 2 871 127
- US-A1- 2007 094 833

## Description

L'invention propose un dispositif de liaison d'un balai d'essuyage avec un bras d'entraînement.

L'invention propose plus particulièrement un dispositif de liaison d'un balai d'essuie-glace avec un bras d'entraînement du balai en mouvement de balayage, qui est relié à un connecteur de montage et d'articulation du balai avec le bras autour d'un axe transversal, le dispositif de liaison étant fixé au balai et étant mobile en pivotement par rapport au connecteur autour dudit axe transversal.

Selon un mode de réalisation général, le dispositif de liaison est fixé sur le balai, et il est monté sur le connecteur de montage, en recouvrant latéralement le connecteur.

De plus, pour faciliter le montage et le démontage du balai sur le bras, le dispositif de liaison est réalisé pour pouvoir pivoter autour de l'axe transversal d'articulation, selon une amplitude supérieure au débattement du balai lors de son mouvement de balayage sur le panneau vitré.

Cependant, l'articulation du balai par rapport au bras permet une amplitude de pivotement élevée, de manière qu'il est possible que le balai se retourne par rapport au panneau vitré, c'est-à-dire que le dispositif de liaison est apte à venir en contact avec le panneau vitré, ce qui présente un risque de détériorer le panneau vitré.

Le dispositif présenté dans le document FR-A-2 866 298 présente un dispositif de liaison qui permet de manière inhérente d'empêcher que le balai se retourne par rapport au panneau vitré.

Cependant, le dispositif de l'art antérieur ne répond que partiellement au problème technique posé notamment lorsque la construction du dispositif de liaison présente des dimensions différentes et que le connecteur qu'il reçoit peut librement tourné autour de l'axe de rotation du dispositif de liaison.

Dans ce but, l'invention propose un dispositif de liaison tel que revendiqué dans la revendication 1.

Selon d'autres caractéristiques de l'invention, prises isolément ou en combinaison :
- la nervure est positionnée sur le fond du dispositif de liaison de manière que le dispositif de liaison est dans une position angulaire permettant la désolidarisation du dispositif de liaison d'avec le connecteur lorsque la nervure est en butée contre les pattes ;
- le dispositif de liaison comporte un arbre transversal coaxial à l'axe A transversal d'articulation qui est monté par emboîtement élastique dans un corps du connecteur pour l'articulation du dispositif de liaison avec le connecteur ;
- la nervure est décalée longitudinalement vers l'avant par rapport à l'arbre transversal ;
- la nervure est décalée longitudinalement vers l'arrière par rapport à l'arbre transversal ;
- le fond porte deux nervures agencées symétriquement par rapport à un axe longitudinal vertical médian du dispositif de liaison, chaque nervure étant associée à une patte longitudinale du connecteur.

D'autres caractéristiques et avantages de l'invention apparaîtront à la lecture de la description détaillée qui suit pour la compréhension de laquelle on se reportera aux figures annexées parmi lesquelles :
- la figure 1 est une section suivant un plan longitudinal vertical du dispositif de liaison selon l'invention qui est monté sur le connecteur de liaison ;
- la figure 2 est une vue de dessus du dispositif de liaison selon l'invention ;
- la figure 3 est une vue similaire à celle de la figure 2, dans laquelle le dispositif de liaison a pivoté par rapport au connecteur selon un angle de 90 degrés ;
- la figure 4 est une vue similaire à celle de la figure 2, dans laquelle le dispositif de liaison est en position angulaire de butée par rapport au connecteur ;
- la figure 5 est une vue similaire à celle de la figure 4, dans laquelle la position de butée du dispositif de liaison correspond à un angle de pivotement inférieur à 90 degrés ;
- la figure 6 est une vue similaire à celle de la figure 2, montrant une variante de réalisation de l'invention de la nervure.

Pour la description de l'invention, on adoptera à titre non limitatif les orientations verticale, longitudinale et transversale selon le repère V, L, T indiqué aux figures.

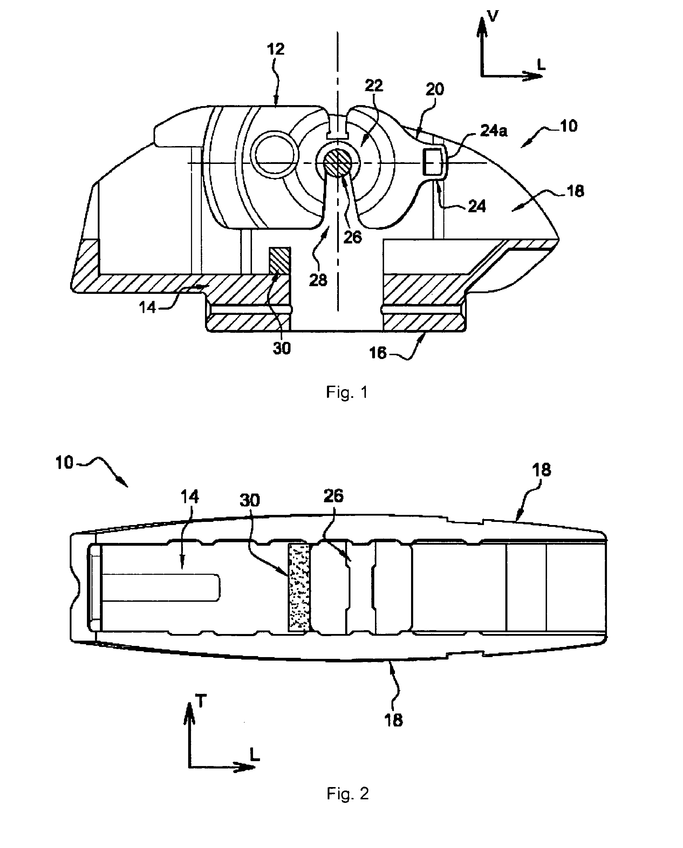

On adoptera aussi l'orientation d'avant en arrière comme étant la direction longitudinale et de gauche à droite en se reportant à la figure 1.

Dans la description qui va suivre, des éléments identiques, similaires ou analogues seront désignés par les mêmes chiffres de référence.

On a représenté aux figures un dispositif de liaison 10 qui est destiné à être monté sur un balai d'essuyage (non représenté) et qui est destiné à être relié à un connecteur 12 de montage et d'articulation du balai sur une extrémité d'un bras d'entraînement (non représenté), autour d'un axe A transversal.

Le dispositif de liaison 10 comporte un fond 14 horizontal qui est en appui sur un dos supérieur (non représenté) du balai, des griffes inférieures 16 de fixation du dispositif de liaison 10 sur le balai qui s'étendent verticalement vers le bas depuis les bord longitudinaux d'extrémité transversale du fond 14 et des ailes latérales 18 qui s'étendent verticalement vers le haut depuis les bord longitudinaux d'extrémité transversale du fond 14.

Les ailes 18 sont agencées transversalement de part et d'autre du connecteur 12 pour bloquer transversalement le balai sur le bras lorsque le dispositif de liaison 10 est monté sur le connecteur 12.

Le connecteur 12 est réalisé pour être monté sur une extrémité longitudinale avant du bras qui est en forme de U recourbé vers l'arrière.

Le connecteur 12 comporte deux parois latérales 20 d'orientation longitudinale verticale, entre lesquelles l'extrémité du bras est reçue, et un corps central 22 qui est reçu dans l'extrémité du bras, entre les branches du U, qui relie les parois latérales 20 entre elles.

Chaque paroi latérale 20 est prolongée longitudinalement vers l'avant par une patte 24, dont l'extrémité longitudinale avant libre 24a de chaque patte 24 est recourbée transversalement pour s'appuyer contre une portion de l'extrémité avant du bras. Les pattes 24 permettent de bloquer longitudinalement le connecteur 12 en position montée sur l'extrémité du bras.

L'articulation du dispositif de liaison 10 par rapport au connecteur 12, et par conséquent, l'articulation du balai par rapport au bras, est réalisée par l'intermédiaire d'un arbre transversal 26 d'articulation coaxial à l'axe transversal A, qui relie les deux ailes 18 du dispositif de liaison 10.

L'arbre transversal 26 est reçu dans le corps central 22 du connecteur 12, par emboîtement élastique au travers d'une ouverture 28 du connecteur 12.

Conformément à l'invention, le dispositif de liaison 10 comporte une portion apte à venir en butée contre un composant du connecteur 12 pour limiter l'amplitude du pivotement du dispositif de liaison 10 par rapport au connecteur 12.

Selon l'invention, cette portion du dispositif de liaison 10 consiste en une nervure 30 d'orientation principale transversale, qui fait saillie vers le haut par rapport au fond 14 du dispositif de liaison 10.

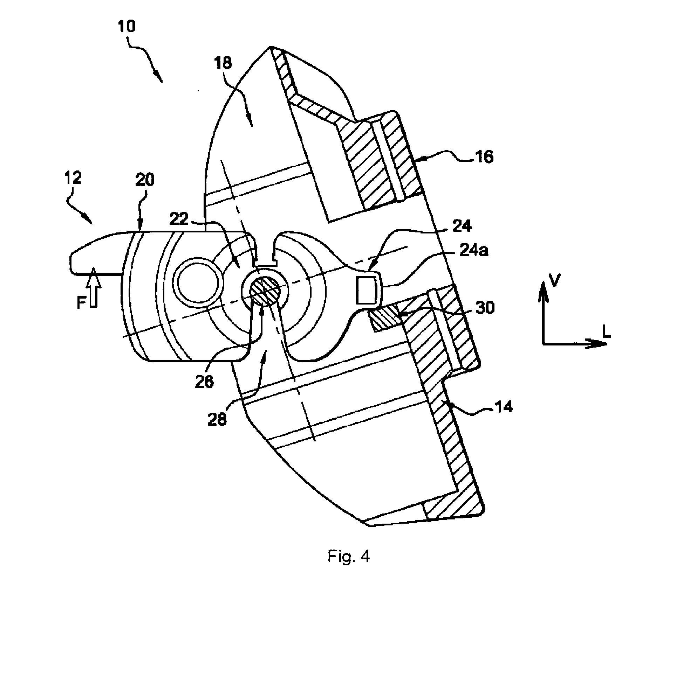

Comme on peut le voir à la figure 4, La nervure 30 est réalisée de manière à venir en butée contre les pattes longitudinales 24 du connecteur 12, lorsque le dispositif de liaison 10 est dans une position déterminée par rapport au connecteur 12, de sorte à empêcher tout pivotement du dispositif de liaison 10 au delà de cette position déterminée représentée à la figure 4.

On a représenté aux figures 1, 3 et 4 différentes positions angulaires du dispositif de liaison 10 par rapport au connecteur 12.

Dans la position angulaire représentée à la figure 1, le dispositif de liaison 10 est orienté globalement horizontalement, cette position angulaire correspond à une position d'essuyage pour laquelle le balai est en appui sur le panneau vitré.

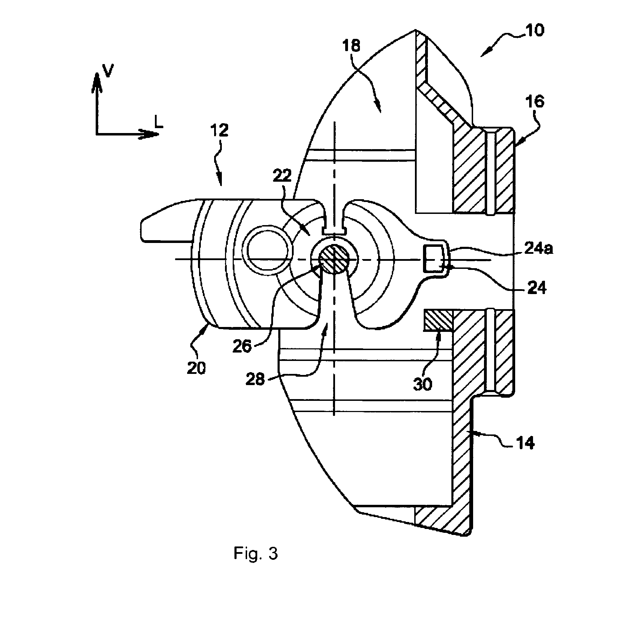

Dans la position angulaire représentée à la figure 3, le dispositif de liaison 10 est positionné à angle droit par rapport à la position angulaire représentée à la figure 1.

Cette position intermédiaire permet de désolidariser le dispositif de liaison 10 d'avec le connecteur 12 par un déplacement globalement vertical vers le bas du dispositif de liaison 10 par rapport au connecteur 12.

La position angulaire représentée à la figure 4 est la position de butée du dispositif de liaison 10, au delà de laquelle le dispositif de liaison 10 ne peut pas pivoter.

Dans cette position, la nervure 30 est en appui vers le haut contre l'extrémité libre de chaque patte 24.

Ici, la position de butée du dispositif de liaison 10 est située au-delà de la position intermédiaire représentée à la figure 3, c'est-à-dire que le dispositif de liaison 10 peut pivoter par rapport au connecteur selon un angle supérieur à 90 degrés.

Pour cela, la nervure 30 est positionnée longitudinalement sur le fond 14 du dispositif de liaison 10 de sorte qu'elle est décalée vers l'arrière par rapport à l'arbre 26.

Cependant il sera compris que l'invention n'est pas limitée à ce mode de réalisation et que la nervure 30 peut être située sur le fond 14 de manière à permettre une rotation selon une amplitude plus importante ou selon une amplitude plus faible.

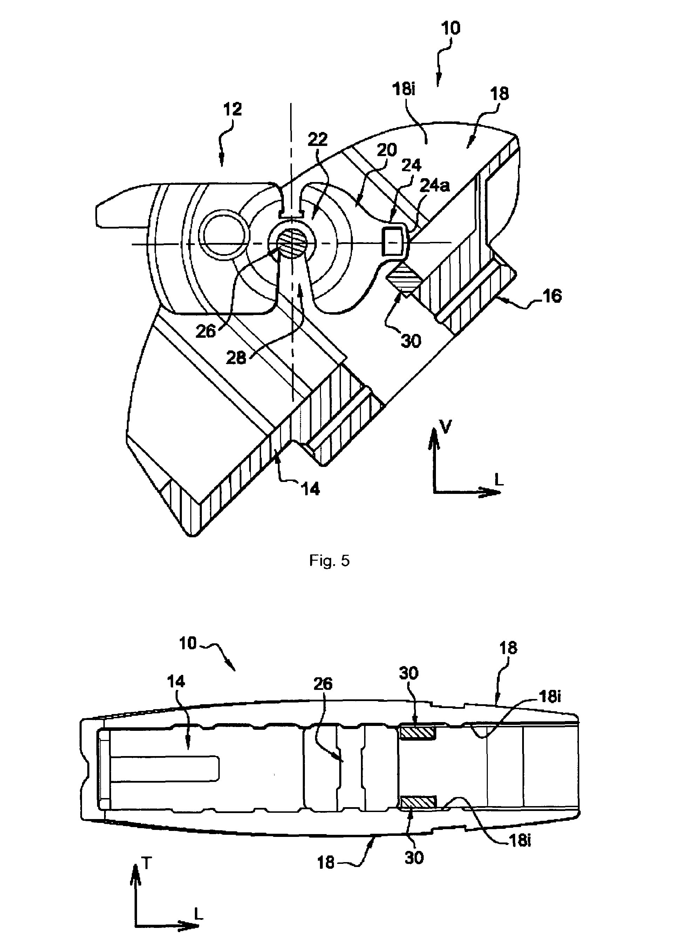

Par exemple, comme on peut le voir aux figures 5 et 6, la nervure 30 est positionnée longitudinalement sur le fond 14 du dispositif de liaison 10 de sorte qu'elle est décalée vers l'arrière par rapport à l'arbre 26.

Ainsi, lorsque le dispositif de liaison 10 est dans sa position de butée représentée à la figure 5, la nervure d'essuyage du balai (non représentée) fait face au panneau vitré, ce qui permet d'empêcher qu'un composant rigide du balai vienne en contact avec le panneau vitré.

De plus, dans cette position de butée, lorsque le balai vient en contact avec le panneau vitré, il pivote automatiquement vers la position d'essuyage représentée à la figure 1, sans que l'utilisateur n'aie à provoquer une rotation initiale du balai et du dispositif de liaison 10 par rapport au connecteur 12.

Selon un autre aspect du dispositif de liaison 10 conforme à l'invention, la nervure 30 forme un appui du connecteur 12 contre le dispositif de liaison 10 pour faciliter la désolidarisation du dispositif de liaison 10 d'avec le connecteur 12.

En effet, l'arbre transversal 26 est monté dans le corps 22 du connecteur par emboîtement élastique au travers de l'ouverture 28 du connecteur.

Ainsi, en utilisant l'appui de la nervure 30 sur les pattes avant 24, et en exerçant sur une partie arrière du connecteur 12 un effort orienté vers le haut, que l'on a représenté par la flèche F à la figure 4, il est alors possible de sortir l'arbre transversal 26 du corps 22.

Le connecteur 12 est alors apte à se déplacer vers le haut par rapport au dispositif de liaison 10 pour permettre la sortie de l'arbre transversal 26 hors du corps 22, en traversant l'ouverture 28 du connecteur 12.

Une telle action sur le connecteur 12 est relativement simple à réaliser par un utilisateur, lors d'une opération de remplacement d'un balai usagé par un balai neuf.

On a représenté à la figure 2 un premier mode de réalisation de l'invention selon lequel le dispositif de liaison 10 comporte une seule nervure 30 qui s'étend transversalement sur toute la largeur du dispositif de liaison 10, c'est-à-dire que la nervure 30 relie les deux ailes 18 du dispositif de liaison 10.

On a représenté à la figure 6 un autre mode de réalisation de l'invention selon lequel le dispositif de liaison 10 comporte deux nervures 30 réparties transversalement de part et d'autre du corps 14 du dispositif de liaison 10.

Chaque nervure 30 s'étend transversalement vers l'intérieur du dispositif de liaison 10 depuis une face longitudinale verticale interne 18i d'une aile 18, en direction de l'autre aile 18.

Chaque nervure 30 est associée à une patte 24 du connecteur 12, de manière qu'une patte 24 vienne en butée contre l'extrémité 24a de la patte 24 associée.

Cela permet de réduire la matière utilisée pour réaliser la butée du dispositif de liaison 10 contre le connecteur 12, et par conséquent, réduire le poids et le coût de production du dispositif de liaison 10.

## Revendications

1. Dispositif de liaison (10) d'un balai d'essuie-glace avec un bras d'entraînement du balai en mouvement de balayage, qui est relié à un connecteur (12) de montage et d'articulation du balai avec le bras autour d'un axe (A) transversal,
le dispositif de liaison (10) étant fixé au balai, étant mobile en pivotement par rapport au connecteur (12) autour dudit axe (A) transversal et comportant une portion (30) apte à venir en butée contre un composant (24) du connecteur (12) pour limiter l'amplitude de pivotement du dispositif de liaison (10) par rapport au connecteur (12) autour de l'axe (A) transversal
**caractérisé en ce que** le dispositif de liaison (10) comporte au moins une nervure (30) faisant saillie vers le haut depuis un fond (14) horizontal du dispositif de liaison (10) et qui est apte à venir en butée contre des pattes longitudinales (24) d'extrémité avant du connecteur (12).

2. Dispositif (10) selon la revendication précédente, **caractérisé en ce que** la nervure (30) est positionnée sur le fond (14) du dispositif de liaison (10) de manière que le dispositif de liaison (10) est dans une position angulaire permettant la désolidarisation du dispositif de liaison (10) d'avec le connecteur (12) lorsque la nervure (30) est en butée contre les pattes (24).

3. Dispositif (10) selon l'une quelconque des revendications précédentes, **caractérisé en ce qu'**il comporte un arbre (26) transversal coaxial à l'axe (A) transversal d'articulation qui est monté par emboîtement élastique dans un corps (22) du connecteur (12) pour l'articulation du dispositif de liaison (10) avec le connecteur (12).

4. Dispositif (10) selon la revendication précédente, en combinaison avec la revendication 2 ou 3, **caractérisé en ce que** la nervure (30) est décalée longitudinalement vers l'avant par rapport à l'arbre (26) transversal.

5. Dispositif (10) selon la revendication 4, en combinaison avec la revendication 1 ou 2, **caractérisé en ce que** la nervure (30) est décalée longitudinalement vers l'arrière par rapport à l'arbre (26) transversal.

6. Dispositif (10) selon l'une quelconque des revendications précédentes, **caractérisé en ce que** le fond (14) porte deux nervures (30) agencées symétriquement par rapport à un axe longitudinal vertical médian du dispositif de liaison (10), chaque nervure (30) étant associée à une patte longitudinale (24) du connecteur (12).

## Patentansprüche

1. Vorrichtung (10) zur Verbindung eines Scheibenwischerblatts mit einem Antriebsarm zum Antreiben des Blatts zu einer Wischbewegung, die mit einem Verbinder (12) zum Anbringen des Blatts am Arm und zum Anlenken des Blatts am Arm um eine Querachse (A) verbunden ist,
wobei die Verbindungsvorrichtung (10) am Blatt befestigt ist, bezüglich des Verbinders (12) um die Querachse (A) schwenkbeweglich ist und einen Abschnitt (30) umfasst, der gegen eine Komponente (24) des Verbinders (12) in Anschlag kommen kann, um die Schwenkweite der Verbindungsvorrichtung (10) um die Querachse (A) bezüglich des Verbinders (12) zu begrenzen,
**dadurch gekennzeichnet, dass die** Verbindungsvorrichtung (10) mindestens eine Rippe (30) umfasst, die von einem horizontalen Boden (14) der Verbindungsvorrichtung (10) nach oben vorsteht und dazu ausgelegt ist, gegen Längsnasen (24) am vorderen Ende des Verbinders (12) in Anschlag zu gelangen.

2. Vorrichtung (10) nach dem vorhergehenden Anspruch, **dadurch gekennzeichnet, dass** die Rippe (30) so am Boden (14) der Verbindungsvorrichtung (10) positioniert ist, **dass sich die Verbindungsvorrichtung** (10) in einer Winkelposition befindet, die die Trennung der Verbindungsvorrichtung (10) vom Verbinder (12) gestattet, wenn sich die Rippe (30) gegen die Nasen (24) im Anschlag befindet.

3. Vorrichtung (10) nach einem der vorhergehenden Ansprüche, **dadurch gekennzeichnet, dass** sie eine zur Gelenkquerachse (A) koaxiale Querwelle (26) umfasst, **die zum Anlenken der** Verbindungsvorrichtung (10) am Verbinder (12) durch elastisches Hineinschieben in einem Körper (22) des Verbinders (12) angebracht ist.

4. Vorrichtung (10) nach dem vorhergehenden Anspruch in Kombination mit Anspruch 2 oder 3, **dadurch gekennzeichnet, dass** die Rippe (30) bezüglich der Querwelle (26) nach vorne in Längsrichtung versetzt ist.

5. Vorrichtung (10) nach Anspruch 4 in Kombination mit Anspruch 1 oder 2, **dadurch gekennzeichnet, dass** die Rippe (30) bezüglich der Querwelle (26) nach hinten in Längsrichtung versetzt ist.

6. Vorrichtung (10) nach einem der vorhergehenden Ansprüche, **dadurch gekennzeichnet, dass** der Boden (14) zwei Rippen (30) aufweist, die bezüglich einer vertikalen, mittleren Längsachse der Verbindungsvorrichtung (10) symmetrisch angeordnet sind, wobei jede Rippe (30) einer Längsnase (24) des Verbinders (12) zugeordnet ist.

## Claims

1. Link device (10) for connecting a windscreen wiper blade with a driving arm driving the blade in sweeping motion, which is linked to a connector (12) for mounting and articulating the blade with the arm about a transversal axis (A),
the link device (10) being fixed to the blade, being able to move by pivoting relative to the connector (12) about said transversal axis (A) and comprising a portion (30) suitable for abutting against a component (24) of the connector (12) to limit the amplitude of pivoting of the link device (10) relative to the connector (12) about the transversal axis (A)
**characterized in that** the link device (10) comprises at least one rib (30) protruding upwards from a horizontal bottom (14) of the link device (10) which is suitable for abutting against front end longitudinal tabs (24) of the connector (12).

2. Device (10) according to the preceding claim, **characterized in that** the rib (30) is positioned on the bottom (14) of the link device (10) so that the link device (10) is in an angular position allowing for the link device (10) to be detached from the connector (12) when the rib (30) is in abutment against the tabs (24).

3. Device (10) according to any one of the preceding claims, **characterized in that** it comprises a transversal shaft (26) coaxial to the transversal articulation axis (A) which is mounted by elastic fitting in a body (22) of the connector (12) for the articulation of the link device (10) with the connector (12).

4. Device (10) according to the preceding claim, in combination with Claim 2 or 3, **characterized in that** the rib (30) is longitudinally offset forwards relative to the transversal shaft (26).

5. Device (10) according to Claim 4, in combination with Claim 1 or 2, **characterized in that** the rib (30) is longitudinally offset backwards relative to the transversal shaft (26).

6. Device (10) according to any one of the preceding claims, **characterized in that** the bottom (14) bears two ribs (30) arranged symmetrically relative to a medium vertical longitudinal axis of the link device (10), each rib (30) being associated with a longitudinal tab (24) of the connector (12).
